# EUROPÄISCHE PATENTANMELDUNG

(11) **EP 1 236 628 A2**
(43) Veröffentlichungstag der Anmeldung: **04.09.2002**
(21) Anmeldenummer: 02000750.6
(22) Anmeldetag: 12.01.2002
(51) Int. Cl.: B60R 25/02

(54) **Verfahren zum Betreiben eines Kraftfahrzeugs mit einer Lenkradverriegelung und einer Überwachungsvorrichtung**

(30) Priorität: 01.03.2001 DE 10109989
(71) Anmelder: Conti Temic Microelectronic GmbH, 90411 Nürnberg (DE)
(72) Erfinder: Fendt, Günter, 86529 Schrobenhausen (DE)
(74) Vertreter: Kolb, Georg

(57) **Zusammenfassung**

Es wird ein Verfahren zum Betreiben eines Kraftfahrzeugs mit einer Lenkradverriegelung und einer Überwachungsvorrichtung vorgestellt, wobei die Überwachungseinrichtung ein den Verriegelungszustand des Lenkrads anzeigendes Signal erzeugt und die Lenkkraftverstärkung auch zündungsunabhängig so lange in Betrieb bleibt, bis das Lenkrad verriegelt ist. Zudem wird vorzugsweise ein Warnsignal aktiviert, wenn der Fahrer das Fahrzeug verlassen will. Ergänzend kann eine Verstellvorrichtung zum Erzeugen der Verstellbewegung des Lenkrads bis zum Einrasten vorgesehen werden.

## Beschreibung

Die Erfindung betrifft ein Verfahren zum Betreiben eines Kraftfahrzeugs mit einer Lenkradverriegelung und einer Überwachungsvorrichtung, wie es beispielsweise der DE 199 16 966 A1 zu entnehmen ist. Dort soll jedoch bei Inbetriebnahme des Fahrzeugs verhindert werden, dass das Fahrzeug gestartet wird, bevor die Lenkradverriegelung gelöst wurde.

Aus versicherungstechnischen wie auch Sicherheitsaspekten heraus ist eine Verrieglung des Lenkrades dennoch wünschenswert.

Eine Lenkradverriegelung für Kraftfahrzeuge ist beispielsweise auch der DE 199 15 747 A1 zu entnehmen. Wie dort auf Spalte 1, Zeilen 20-27 zu entnehmen ist, muss am Lenkrad zum Verriegeln nach dem Abziehen des Zündschlüssels aus dem Zündschloss noch eine geringfügige Lenkradbewegung vorgenommen werden, wozu ein erhöhter Kraftaufwand erforderlich ist. Deshalb wird die Lenkradverriegelung häufig bewusst oder versehentlich nicht aktiviert.

Deshalb wird bereits aus der DE 199 24 835 A1 eine Vorrichtung zur automatischen Ver- und Entriegelung der Lenkspindel eines Kraftfahrzeuges vorgestellt. Dabei wird die Lenkspindel in der aktuellen Position verriegelt. Der Aufwand dafür ist jedoch erheblich und setzt konstruktive Veränderungen und in erheblichem Umfang zusätzliche Baugruppen voraus.

Daher soll nachfolgend ein alternatives Konzept vorgestellt werden, welches mit einfacheren Mitteln realisierbar ist.

Durch die Lenkradverriegelung mit Überwachungsvorrichtung kann der Lenkradverriegelungszustand erfaßt werden. Zudem bleibt eine Lenkkraftverstärkung weiter in Betrieb, sofern das Lenkrad noch nicht verriegelt ist, und zwar vorzugsweise zündungsunabhängig so lange, bis das Lenkrad verriegelt ist.

Ergänzend wird in Abhängigkeit vom Verriegelungszustand zusätzlich ein akustisches oder optisches Signal an den Fahrer erzeugt, wenn er die Zündung abschaltet, die Fahrertür öffnet oder das Fahrzeug von außen manuell oder per Funkfernbedienung verschließt oder in sonstiger Weise für Sensoren erfaßbar das Fahrzeug deaktivieren will, bspw. sich mit seinem zur Fahreridentifikation und automatischen Ver- und Entriegelung der Fahrzeugtüren verwendeten Signalgeber vom Kraftfahrzeug entfernt. Derartige Fahreridentifikationssysteme sind an sich bereits bekannt, beispielsweise aus der DE 198 39 355, DE 198 46 803 oder DE 199 41 428 A1.

Durch die Information über den Lenkradverriegelungszustand an den Fahrer wird er über den nicht vollständig gesicherten Zustand seines Fahrzeugs informiert und dazu veranlaßt, die Lenkradverriegelung doch noch einzurasten, wobei die noch in Betrieb befindliche Lenkkraftverstärkung dabei auch körperlich schwächeren Menschen bei stehendem Fahrzeug die Erzeugung der erforderlichen Verstellbewegung ermöglicht. Im Gegensatz zu einer automatischen Verriegelung kann mit Ausnahme der erforderlichen Überwachungsvorrichtung dabei auf bereits im Fahrzeug vorhandene Signalisierungsvorrichtungen zurückgegriffen werden, bspw. auf die Hupe oder ein Sprachdialogsystem des Kraftfahrzeugs, die Lampen im oder am Fahrzeug, insbesondere die Blinklichter und/oder Scheinwerfer und/oder Rücklichter und/oder Bremslichter. Dabei wird vorzugsweise eine von anderen Signalen unterscheidbare Signalform gewählt.

Ergänzend können andere Systeme im Kraftfahrzeug den Lenkradverriegelungszustand abfragen, um beispielsweise ein Anfahren oder Wegrollen des Fahrzeugs zu verhindern.

Ergänzend kann eine Verstellvorrichtung vorgesehen sein, die den für die Verriegelung erforderliche Verstellung am Lenkrad oder einem gleichwirkenden Teil im Verriegelungssystem bewirkt.

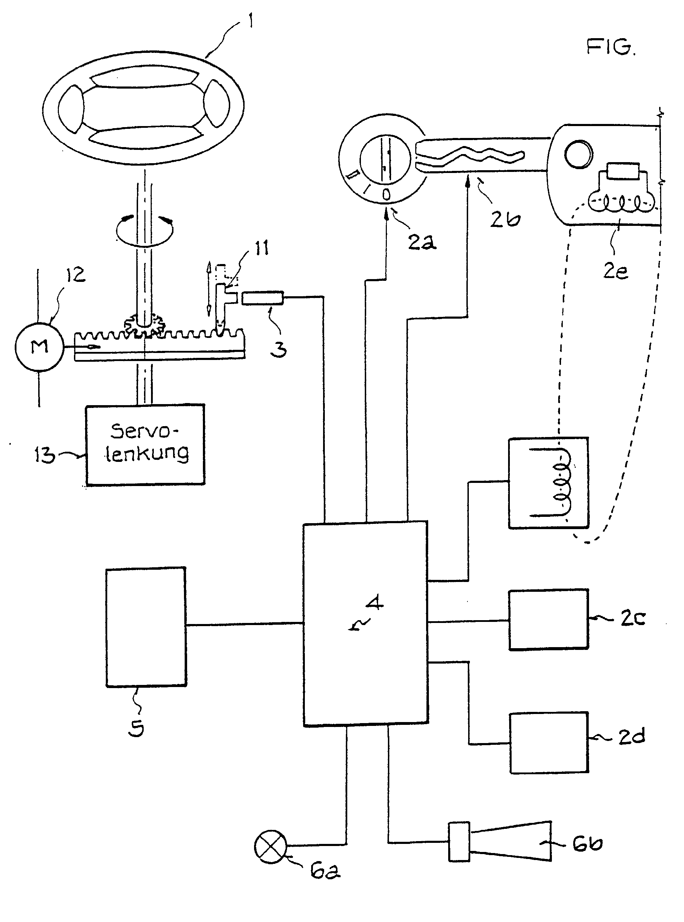

Die Erfindung wird nachfolgend anhand eines Ausführungsbeispiels und der Figur näher erläutert. Kurze Beschreibung der Figur:
- Figur: Kraftfahrzeug mit einer Überwachungseinrichtung für die Lenkradverriegelung

Die (einzige) Figur zeigt ein Kraftfahrzeug mit einer Überwachungseinrichtung 4 für die Lenkradverriegelung 11 des Lenkrades 1. Die Überwachungsvorrichtung 4 weist dazu einen Sensor 3 zur Erfassung des Verriegelungszustands, bspw. einen Positionssensor für das Verriegelungselement auf. Entsprechend der Signale des Sensors 3 erzeugt die Überwachungsvorrichtung 4 ein den Verriegelungszustand des Lenkrads (1) anzeigendes Signal.

Während jedoch üblicherweise beim Abschalten der Zündung des Fahrzeugs auch die heute übliche Lenkkraftverstärkung 13 deaktiviert wird, so bleibt diese erfindungsgemäß weiter in Betrieb, sofern das Lenkrad 1 noch nicht verriegelt ist.

Dazu wird einzig die Lenkkraftverstärkung 13 nicht über das Zündschloss 2a mit der Energieversorgung getrennt, sondern weist eine eigenständige und von der Überwachungseinrichtung 4 aus steuerbare Energieversorgung auf. Dadurch kann das Lenkrad 1 ohne großen Kraftaufwand auch beim Stillstand des Motors noch in die Einrastposition der Lenkradverriegelung gedreht werden, was bisher einer der Hauptgründe für die nicht gesicherten Fahrzeuge war.

Um die Energiereserven andererseits zu schonen, wird die Lenkkraftverstärkung nur maximal für eine vorgegebene Zeitdauer nach Abschalten der Zündung weiter in Betrieb gehalten, vorzugsweise sofort mit dem Verriegeln des Lenkrades oder alternativ mit dem Verschließen 2d des Fahrzeuges von der Überwachungseinrichtung 4 beendet.

Zudem wird von der Überwachungseinrichtung 4 vorzugsweise ein Warnsignal erzeugt, wenn der Sensor 3 anzeigt, daß das Verriegelungselement 11 in der entriegelten Position, das Lenkrad 1 also nicht verriegelt ist und zumindest eine der nachfolgenden weiteren alternativen Bedingungen eintritt. Ziel dieser Bedingungen ist es, eine Ausserbetriebnahmeabsicht des Fahrers zu erkennen und ihn zur Verriegelung des Lenkrads zu animieren, wenn dies noch nicht erfolgt ist.

So wird entweder die Zündung, also die Stellung des Zündschlosses 2a erfaßt und bei entsprechender Deaktivierung der Zündung ohne Verriegelung des Fahrzeugs das Warnsignal erzeugt.

Alternativ dazu kann bzw. wird der Fahrer gewarnt, wenn die Lenkradverriegelung nicht eingerastet hat und bzw. nachdem er den Zündschlüssel 2b des Kraftfahrzeuges abgezogen hat.

Des weiteren kann mittels eines Türsensors 2c die Fahrertür des Kraftfahrzeuges überwacht werden und der Fahrer beim Öffnen der Tür darauf hingewiesen werden, dass das Lenkrad 1 noch nicht verriegelt ist. Diese bisher vorgestellten Varianten haben den Vorteil, dass der Fahrer sich noch im Fahrzeug befindet und somit schnell ans Lenkrad greifen und die Verriegelung einrasten lassen kann.

Besonders einfach läßt sich gerade bei Fahrzeugen mit einer Zentralverriegelung auch realisieren, daß der Fahrer gewarnt wird, wenn das Kraftfahrzeug von außen verschlossen wird, ohne dass das Lenkrad 1 verriegelt ist. Dazu muß einzig eine entsprechende Datenverbindung zwischen der Überwachungsvorrichtung 4 für die Lenkradverriegelung mit dem Türschloß oder dem Steuergerät 2d Zentralverriegelung geschaffen werden.

Alternativ ist auch ein Datenaustausch mit einem Fahreridentifikationssystem denkbar, so dass eine Warnung erfolgt, wenn ein zur Fahreridentifikation und automatischen Ver- und Entriegelung der Fahrzeugtüren verwendeter Signalgeber 2e einen vorgegebenen Nahbereich um das Kraftfahrzeug verläßt.

Um grundsätzlich bei all diesen Varianten den Fahrer nicht zu häufig zu belästigen, erscheint es vorteilhaft, dass die Überwachungsvorrichtung 4 bei nicht verriegeltem Lenkrad 1 erst dann ein Warnsignal erzeugt, wenn der Zustand eine vorgegebene Zeitdauer vorliegt. Die Zeitsteuerung wird dabei von der Überwachungseinrichtung 4 durchgeführt.

Das zunächst elektrische Warnsignal von der Überwachungsvorrichtung 4 wird nun vorzugsweise an eines der vorhandenen Signalisierungssysteme im Fahrzeug gesendet, beispielsweise ein akustisches Warnsignal erzeugt, indem vorzugsweise die Hupe (6b) oder ein Sprachdialogsystem des Kraftfahrzeugs aktiviert wird, oder auf das elektrische Warnsignal der Überwachungsvorrichtung 4 hin ein optisches Signal 6a erzeugt, insbesondere die Blinklichter und/oder Scheinwerfer und/oder Rücklichter und/oder Bremslichter aktiviert werden. Dabei wird eine von anderen Signalen im Fahrzeug, insbesondere dem Verriegelungssignal beim Verschließen, unterscheidbare Signalform gewählt.

Ergänzend kann eine Verstellvorrichtung 12 vorgesehen werden, die den erforderlichen Verstellweg des Lenkrades 1 bis zum Einrasten der Lenkradverriegelung 11 aufbringt.

## Patentansprüche

1. Verfahren zum Betreiben eines Kraftfahrzeugs mit einer Lenkradverriegelung und einer Überwachungsvorrichtung (4), die ein den Verriegelungszustand des Lenkrads (1) anzeigendes Signal erzeugt, einer Zündung sowie einer Lenkkraftverstärkungsvorrichtung (13), **dadurch gekennzeichnet, dass** beim Abschalten der Zündung des Fahrzeugs die Lenkkraftverstärkungsvorrichtung (13) weiter in Betrieb bleibt, sofern das Lenkrad (1) noch nicht verriegelt ist.

2. Verfahren nach Anspruch 1, **dadurch gekennzeichnet, daß** die Lenkkraftverstärkung für eine vorgegebene Zeitdauer nach Abschalten der Zündung weiter in Betrieb ist.

3. Verfahren nach Anspruch 2, **dadurch gekennzeichnet, daß** die Lenkkraftverstärkung (13) nach Abschalten der Zündung (2a) maximal bis zum Verschließen (2d) des Fahrzeuges weiter in Betrieb ist.

4. Verfahren nach einem der vorangehenden Ansprüche, **dadurch gekennzeichnet, dass** zusätzlich ein Warnsignal erzeugt wird, wenn der Fahrer das Fahrzeug verlassen will und das Lenkrad (1) nicht verriegelt ist.

5. Verfahren nach einem der vorangehenden Ansprüche, **dadurch gekennzeichnet, daß** eine Verstellvorrichtung (12) aktiviert wird, welche eine Verstellbewegung des Lenkrads vorzugsweise bis zum Einrasten der Lenkradverriegelung (11) durchführt, und die Lenkradverstärkung (13) solange aktiv bleibt.

6. Kraftfahrzeug mit einer Überwachungseinrichtung für eine Lenkradverriegelung zur Durchführung des Verfahrens nach einem der vorangehenden Ansprüche.
